(19) Europäisches Patentamt
European Patent Office
Office européen des brevets

(11) Publication number: **0 333 002 B1**

(12) **EUROPEAN PATENT SPECIFICATION**

(45) Date of publication of patent specification: **27.04.94**

(51) Int. Cl.5: **C08L 69/00**, C08L 67/02, C08L 77/00, //(C08L69/00,67:02, 77:00),(C08L67/02,69:00,77:00), (C08L77/00,69:00,67:02)

(21) Application number: **89104047.9**

(22) Date of filing: **08.03.89**

(54) **Heat-resistant resin composition.**

(30) Priority: **15.03.88 JP 59466/88**

(43) Date of publication of application: **20.09.89 Bulletin 89/38**

(45) Publication of the grant of the patent: **27.04.94 Bulletin 94/17**

(84) Designated Contracting States: **BE CH DE FR GB IT LI NL SE**

(56) References cited:
**EP-A- 0 135 904**
**EP-A- 0 192 065**
**EP-A- 0 269 984**

**PATENT ABSTRACTS OF JAPAN, vol. 3, no. 3 (C-33), 16 January 1979;**

(73) Proprietor: **IDEMITSU PETROCHEMICAL CO. LTD.**
**1-1, Marunouchi 3-chome**
**Chiyoda-ku**
**Tokyo 100(JP)**

(72) Inventor: **Kazuto, Hashimoto**
**Idemitsu Petrochemical Co., Ltd.**
**1-1 Anesakikaigan Ichihara-shi**
**Chiba-Ken(JP)**
Inventor: **Shigeru, Nishiyama**
**Idemitsu Petrochemical Co., Ltd.**
**1-1 Anesakikaigan Ichihara-shi**
**Chiba-Ken(JP)**

(74) Representative: **Türk, Gille, Hrabal, Leifert et al**
**Brucknerstrasse 20**
**D-40593 Düsseldorf (DE)**

**EP 0 333 002 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

### BACKGROUND OF THE INVENTION

1. Field of the Invention

The present invention relates to a heat-resistant resin composition, and more particularly to a polycarbonate resin composition excellent in heat-resistance, impact resistance, solvent resistance and moldability, comprising an aromatic polycarbonate, polyarylate, polyamide and rubber-like elastomer in specific proportions.

2. Description of the Related Arts

A polycarbonate resin composition containing polyarylate with improved heat-resistance has heretofore been known (Japanese Patent Publication No. 27061/75). Said polycarbonate resin composition, however, is unsatisfactory satisfactory in solvent resistance, though it has been improved in heat resistance to some degree.

In order to improve the said solvent resistance, polyamide or polyethylene terephthalate (PET) have been compounded with the said composition (Japanese Patent Publication No. 31224/85). In this case, however, solvent resistance may indeed be improved, but not less than 20% by weight of polyamide must be compounded for the purpose, which causes a problem in that the excellent impact resistance inherent in polycarbonate resins would be reduced.

Under such circumstances, investigations have been repeated to overcome the problem of the conventional arts mentioned above, and to develop a polycarbonate resin composition having excellent moldability, and improved heat resistance and solvent resistance while maintaining the original impact resistance. It has been found that the above object can be attained by compounding polyarylate together with polyamide and rubber-like elastomer with aromatic polycarbonate in specific proportions, as the result of these investigations. The present invention has been completed based upon such finding.

### SUMMARY OF THE INVENTION

An object of the present invention is to provide a polycarbonate resin composition which has improved heat resistance and solvent resistance.

Another object of the present invention is to provide a polycarbonate resin composition which has excellent moldability, in addition to the improved heat resistance and solvent resistance.

The present invention relates to a heat-resistant resin composition comprising:

(A) 10 to 80% by weight of aromatic polycarbonate,
(B) 10 to 80% by weight of polyarylate,
(C) 10 to 20% by weight of polyamide, and
(D) 1 to 15 parts by weight of rubber-like like elastomer per 100 parts by weight of the total amount of the above (A), (B) and (C).

The resin composition of the present invention fundamentally comprises each component of (A), (B), (C) and (D), as described above.

### DESCRIPTION OF PREFERRED EMBODIMENTS

Various aromatic polycarbonates can be used as component (A) of the present invention, but those usually used are the polymers having a repeating unit represented by the general formula:

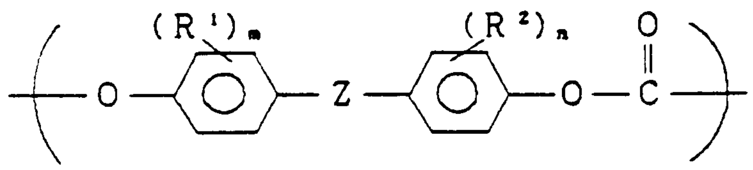

(wherein Z is a single bond or an alkylene group having 1 to 8 carbon atoms, an alkylidene group having 2 to 8 carbon atoms, a cycloalkylene group having 5 to 15 carbon atoms, a cycloalkylidene group having 5 to

15 carbon atoms, $SO_2$, SO, O, CO or the group represented by:

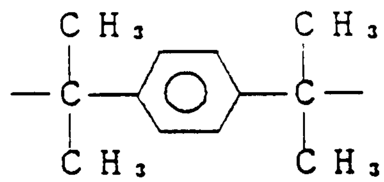

$R^1$ and $R^2$ are each a hydrogen atom, a chlorine atom, a bromine atom or an alkyl group having 1 to 8 carbon atoms, and m and n are each an integer of 0 to 4.)

Said aromatic polycarbonates can be produced by the solvent method, for instance, (1) phosgene reaction in which divalent phenol is reacted with carbonate precursors such as phosgene and the like in the presence of a known acid acceptor and a molecular modifier in a solvent such as methylene chloride, or (2) the ester exchange reaction in which divalent phenol is reacted with carbonate precursors such as diphenyl carbonate and the like in the presence of the above acid acceptor and the molecular modifier in the solvent.

Preferred divalent phenols used in the reaction are bisphenols, and particularly preferred is 2,2-bis(4-hydroxyphenyl)propane (bisphenol A). Part of or all of said bisphenol A may be replaced by another divalent phenol. Examples of divalent phenols other than bisphenol A are compounds such as hydroquinone, 4,4′-dihydroxydiphenyl, bis(4-hydroxyphenyl)alkane, bis(4-hydroxyphenyl)cycloalkane, bis(4-hydroxyphenyl)sulfide, bis(4-hydroxyphenyl)sulfone, bis(4-hydroxyphenyl)sulfoxide, and bis(4-hydroxyphenyl)ether; or bisphenol halides such as bis(3,5-dibromo-4-hydroxyphenyl)propane, and bis(3,5-dichloro-4-hydroxyphenyl)propane. These divalent phenols may be the homopolymer of divalent phenols or the copolymer of two or more kinds, or the blend thereof.

The aromatic polycarbonates as component (A) used in the present invention, further, may be thermoplastic polycarbonates with branched random structure, which are obtained by reacting a multifunctional aromatic compound with a divalent phenol and/or a carbonate precursor.

In due consideration of mechanical strength and moldability, the viscosity average molecular weight of said (A) aromatic polycarbonates are preferably 10,000 to 100,000, and most preferably 20,000 to 40,000.

In the resin composition of the present invention, the proportion of said (A) aromatic polycarbonates is 10 to 80% by weight, and preferably 20 to 70% by weight of the whole composition. Herein, if the proportion is less than 10% by weight, the impact resistance of the composition cannot be sufficiently maintained, and if the proportion is greater than 80% by weight, the heat resistance is lowered.

Polyarylates as component (B) of the resin composition of the present invention are obtained by reacting a mixture of telephthalic acid and isophthalic acid or the function derivatives thereof (molar ratios of the telephthalic acid group and the isophthalic acid group are 1:9 to 9:1) with bisphenols represented by the general formula:

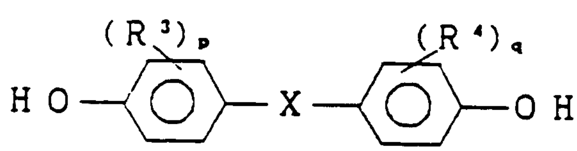

(wherein X is O,S, $SO_2$, an alkylene group or an alkylidene group, $R^3$ and $R^4$ are each a hydrogen atom, a halogen atom or a hydrocarbon group, p and q are each an integer of 1 to 4.) Examples of the abovementioned bisphenols are 4,4-dihydroxy-diphenylether, bis(4-hydroxy-2-methylphenyl)ether, bis(4-hydroxy-3-chlorophenyl)ether, bis(4-hydroxyphenyl)sulfide, bis(4-hydroxyphenyl)sulfone, bis(4-hydroxyphenyl)ketone, bis(4-hydroxyphenyl)methane, bis(4-hydroxy-3-methylphenyl)methane, bis(4-hydroxy-3,5-dichlorophenyl)methane, bis(4-hydroxy-3,5-dibromophenyl)methane, bis(4-hydroxy-3,5-difluorophenyl)-methane, 1,1-bis(4-hydroxyphenyl)ethane, 2,2-bis(4-hydroxy-3-methylphenyl)propane, 2,2-bis(4-hydroxy-3-chlorophenyl)propane, 2,2-bis(4-hydroxy-3,5-dichlorophenyl)propane, 2,2-bis(4-hydroxy-3,5-dibromophenyl)-propane, 1,1-bis(4-hydroxyphenyl)-n-butane, bis(4-hydroxyphenyl)phenylmethane, bis(4-hydroxyphenyl)-diphenylmethane, bis(4-hydroxyphenyl)-4-methylphenylmethane, 1,1-bis(4-hydroxyphenyl)-2,2,2-trichloroethane, bis(4-hydroxyphenyl)-(4′-chlorophenyl)-methane, 1,1-bis(4-hydroxyphenyl)cyclohexane, bis(4-hydroxyphenyl)cyclohexylmethane, and 2,2-bis(4-hydroxynaphthyl)propane.

The most typical bisphenols are 2,2-bis(4-hydroxyphenyl)propane, called bisphenol A or 2,2-bis(4-hydroxy-3,5-dibromophenyl)propane, called tetrabromo bisphenol A. If necessary, the mixtures of bisphenols and small amounts of other divalent compounds can be used. Said divalent compounds are dihydroxynaphthalenes including 2,2-dihydroxydiphenyl, and 2,6-dihydroxynaphthalene, or hydroquinones, resorcinol, 2,6-dihydroxychlorobenzene, 2,6-dihydroxytoluene, and 3,6-dihydroxytoluene. Mixtures of bisphenols and alkylene glycols are also applicable. In that case, the molar ratios of bisphenols and alkylene glycols are preferably 100:1 to 100:100.

The function derivatives of telephthalic acid or isophthalic acid described above are the dichlorides of these acids or diesters of alkyl, aryl and the like. The phenylene groups of telephthalic acid or isophthalic acid or function derivatives thereof can be replaced by halogen atoms, specifically by bromine atoms or alkyl groups.

In the resin composition of the present invention, the abovementioned polyarylates as component (B) are compounded in the proportion of 10 to 80% by weight, and preferably 20 to 70% by weight of the whole composition. Herein if the proportion is less than 10% by weight, heat resistance of the composition cannot be sufficiently maintained, and if the proportion is more than 80% by weight, impact resistance and fluidity are lowered.

The polyamide used as component (C) of the resin composition of the present invention is represented by the general formula:

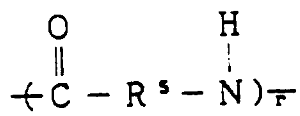

or

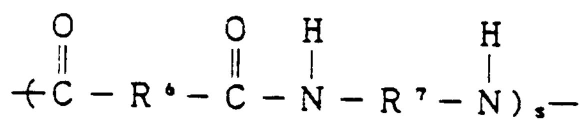

Therein $R^5$, $R^6$, and $R^7$ are each an alkylene group, a part of which may be replaced by aromatic groups or aliphatic groups, and r and s show the degree of polymerization.

Polyamides as component (C) include the polymers formed by a condensation reaction of diamine and dibasic acid, self-condensation of amino acids or a polymerization reaction of lactam, but may contain in some part different kinds of bonds such as ester groups, sulfone groups or ether groups. Polyamides used in the present invention are not critical, as long as represented by the above general formula. Preferred examples of polyamides here are polyhexamethylene adipamide, polycaprolactam, polyhexamethylene sebacamide, polydecamethylene adipamide or copolymers thereof. Among them, polycaprolactam and polyhexamethylene adipamide are preferred.

In the resin composition of the present invention, the proportion of the above polyamides as component (C) is 10 to 20% by weight, preferably 13 to 18% by weight of the whole composition. Herein, if the proportion is less than 10% by weight, the solvent resistance and fluidity of the composition are lowered, and if it is more than 20% by weight, impact resistance and heat resistance are lowered.

In the present invention, further, a rubber-like elastomer is compounded as component (D). Various kinds of rubber-like elastomers can be used and particularly preferred ones are as follows.

For example, (1) a resin polymer obtained by polymerizing one or more kinds of vinyl monomers in the presence of a rubber-like polymer having alkylacrylate and/or alkylmethacrylate as its main component. Herein preferred alkylacrylates or alkylmethacrylates are those having alkyl groups with 2 to 10 carbon atoms, more specifically, ethylacrylate, butylacrylate, 2-ethylhexylacrylate, and n-octyl methacrylate.

Rubber-like polymers having these alkylacrylates refers to polymers obtained by reacting not less than 70% by weight of the said alkylacrylates and not more than 30% by weight of other vinyl monomers which are copolymerizable with the said alkylacrylates, for example, methylmethacrylate, acrylonitrile, vinyl

acetate, or styrene. These polymers also include polymers obtained by adding during reaction properly the multifunctional monomers such as divinylbenzene, ethylenedimethacrylate, triallylcyanurate, triallylisocyanurate as a cross-linking agent. The vinyl monomers subjected to reaction in the presence of rubber-like polymers refer to monomers of aromatic vinyl compounds including styrene and alpha-methylstyrene, acrylates including methyl acrylate and ethyl acrylate, and methacrylates including methylmethacrylate and ethyl methacrylate. And one or more kinds of these monomers are subjected to reaction. Further, said vinyl monomers are polymerized with vinyl cyanides such as acrylonitrile and methacrylonitrile, or vinyl esters such as vinyl acetate and vinyl propionate. The polymerization reaction can be performed by various methods including block polymerization, suspension polymerization, and emulsion polymerization. The most preferred method among them is emulsion polymerization.

The resin polymers thus obtained preferably have at least 20% by weight of the previously mentioned rubber content. The example of such resin copolymers are MAS resin elastomers including the graft copolymer of 60 to 80% by weight of n-butylacrylate and styrene or methyl methacrylate, and MS resin elastomers, the copolymer of styrene and methyl methacrylate. The above MAS resin elastomers are specifically, "KM-330" (trade name) manufactured by Rohm & Haas Co., Ltd., and "METABLEN W529" manufactured by Mitsubishi Rayon Co., Ltd.

The rubber-like elastomer as component (D) includes resin polymers which are obtained by polymerizing one or more kinds of vinyl monomers and copolymer obtained by copolymerizing alkylacrylate and/or alkylmethacrylates with a multifunctional monomer having conjugated diene-type double bonds. The alkylacrylates or alkyl methacrylates used herein are those mentioned previously. The multifunctional monomers having conjugated diene-type double bonds include conjugated diene compounds such as butadiene and isoprene, and compound having non-conjugated diene-type double bonds as well as conjugated diene-type double bonds in one molecule. Specific examples of these compounds are 1-methyl-1-vinyl-4,6-heptadiene-1-ol, 7-methyl-3-methylene-1,6-octadiene, and 1,3,7-octatriene.

Vinyl monomers such as aromatic vinyl compounds including styrene, alpha-methylstyrene; vinyl cyanate compounds including acrylonitrile, and methacrylonitrile; vinylester compounds including vinyl acetate, vinyl propionate; vinyl ether compounds including methylvinyl ether; vinyl halide compounds including vinyl chloride can be added in copolymerization of the abovementioned alkylacrylate and/or alkylmethacrylate, and the multifunctional polymerized monomer having conjugated diene-type double bonds. Furthermore, cross-linking agents such as ethylene dimethacrylate and divinyl-benzene can be added.

In producing copolymers by copolymerizing the abovementioned alkylacrylate and/or alkylmethacrylate and the multifunctional monomers having conjugated diene-type double bonds, the said multifunctional monomers should be used so as the occupy 0.1 to 20% by weight, preferably 1 to 10% by weight of the copolymer.

The vinyl monomers to be mixed with the copolymers thus obtained are those mentioned above, and one or more kinds are used. Herein the polymerization reaction can be performed by various methods such as block polymerization, suspension polymerization, and emulsion polymerization. The most preferred method is emulsion polymerization.

Preferred examples of such resin compositions are shown as follows.

One of them is a graft copolymers obtained by graft polymerization of latex and vinyl monomers including styrene, acrylonitrile, vinyl chloride as graft monomers. The latex described above is prepared by copolymerizing alkyl(meth)acrylates such as n-butylacrylate, 2-ethyl-hexylacrylate and methylmethacrylate, and butadiene, and a small amount of cross-linking agents including ethylene-dimethacrylate and divinylbenzene by the usual method.

Another example is graft copolymers obtained by graft polymerization of latex and vinyl monomers as described above according to the usual method, in which the latex is prepared by copolymerizing the abovementioned alkyl(meth)acrylate and the compounds having non-conjugated double bond as well as conjugated diene-type double bonds in one molecule. Herein graft polymerization may be done at one stage or several kinds of monomers may be graft-polymerized at multi-stages, respectively.

More specific examples of such resin polymers are : MABS resin elastomers including graft copolymers obtained by graft-polymerizing latex with styrene and methyl methacrylate, said latex being prepared by copolymerizing octylacrylate and butadiene in the proportion of 7 : 3; and MBS resin elastomer including graft copolymers obtained through graft polymerizing styrene with the rubber latex prepared by copolymerizing methyl methacrylate and butadiene.

Preferred examples of the MABS resin elastomer mentioned above are "HIA 15", "HIA 28" and "HIA 30" (each trade name) manufactured by KUREHA CHEMICAL INDUSTRY CO., LTD.

Further, other rubber-like elastomers, for example ABS, MBS resin elastomer, can be used.

As the resin composition of the present invention, such rubber-like elastomers are used as component (D). The proportion of composition is 1 to 15 parts by weight, preferably 3 to 10 parts by weight per 100 parts by weight of the aforementioned (A), (B), and (C) in total. Herein if the proportion is less than 1 part by weight, the improvement in impact resistance and solvent resistance of the composition is insufficient, and if it is more than 15 parts by weight, heat resistance of the composition is lowered.

The resin composition of the present invention requires as necessary components the abovementioned components (A), (B), (C) and (D), but if desired, inorganic fillers, various additives, other synthetic resins, and elastomers can be compounded, as long as the object of the present invention is not hindered.

The abovementioned inorganic fillers are compounded for the purpose of improving the mechanical strength or durability, or increasing the volume of the polycarbonate resin composition of the present invention. Inorganic fillers which can be used are glass fiber, glass beads, glass flake, carbon black, calcium sulfate, calcium carbonate, calcium silicate, titanium oxide, alumina, silica, asbestos, talc, clay, mica, and quartz powder.

Said various additives are antioxidants such as hindered phenol, phosphorus including phosphite and phosphate, and amine-based antioxidants; benzotriazole-based ultraviolet ray absorbant and benzophenone-based ultraviolet ray absorbants; external lubricants such as aliphatic carboxylate and paraffin-based lubricants; flame retardants; releasing agents; antistatic agents; colorants; and the like.

Preferable examples of the hindered phenol-based antioxidants mentioned above are 2,6-di-t-p-cresol (BHT), IRGANOX 1067 (trade name, produced by Ciba-Geigy Corp.), IRGANOX 1010 (trade name, produced by Ciba-Geicy Corp.), Ethyl 330 (trade name, produced by Ethyl Corp.), and Sumilizer CM (trade name, produced by Sumitomo Chemical Co., Ltd.) Other synthetic resins than the above are, for example, polyethylene, polypropylene, AS resins, ABS resins, polymethylmethacrylate and the like.

The examples of elastomers are isobutylene-isoprene rubber, styrene-butadiene rubber, ethylene-propylene rubber, and acrylate elastomer. Blending and kneading of these components are performed by usual methods using a ribbon blender, a Henschel mixer, a Banbury mixer, a drum tumbler, a single-screw extruder, a twin-screw extruder, a kneader, a multi-screw extruder and the like.

The adequate heating temperature in kneading is usually in the range of 250 to 300 ° C.

The resin composition of the present invention has a high practical value, since it has excellent moldability and greatly improved heat resistance in addition to impact resistance and solvent resistance similar to those of conventional polycarbonate resins, so that a coating process employing alkyds and melamines becomes possible.

Accordingly, the resin composition of the present invention can be widely and effectively applied, employing various known molding methods, such as injection molding, extrusion molding, compression molding, calender molding, rotary molding, the molding for cars including bumpers, and moldings for house electric appliances.

The present invention will be described in greater details with reference to the following examples.

Examples 1 to 6 and Comparative Examples 1 to 4

Each of the resins and the rubber-like elastomers shown in Table 1 in the prescribed amount was dried, chip-blended, and supplied into an extruder to be kneaded at 280 ° C. The resulting compositions were pelletized.

Further, the pellets obtained were dried at 120 ° C for 12 hours, then injection-molded at a die temperature of 80 ° C to obtain test pieces.

The test pieces resulted were measured for heat deformation temperature, Izod impact strength and solvent resistance. Moreover, the flow value of the pellets were measured. The results are shown in Table 1.

Table 1

| No. | Polycarbonate Kind | Polycarbonate Ratio (wt%) | Polyamide Kind | Polyamide Ratio (wt%) | Polyarylate Kind | Polyarylate Ratio (wt%) | Rubber-like Elastomer Kind | Rubber-like Elastomer Ratio (wt%) | Evaluation: Izod[*8] Impact Strength (kg cm/cm ) | Evaluation: Temperature[*9] of Heat Deformation (°C) | Evaluation: Flow[*10] Value (ml/sec) | Evaluation: Solvent[*11] Resistance |
|---|---|---|---|---|---|---|---|---|---|---|---|---|
| Example 1 | A3000[*1] | 47 | N6[*2] | 11 | NC10[*4] | 42 | E-1[*5] | 5 | 60 | 135 | $4.1x10^{-2}$ | 0.40 |
| Example 2 | A3000 | 63 | N6 | 16 | NC10 | 21 | E-1 | 5 | 85 | 130 | $5.3x10^{-2}$ | 0.45 |
| Example 3 | A3000 | 40 | N66[*3] | 19 | NC10 | 41 | E-4[*12] | 7 | 75 | 130 | $5.1x10^{-2}$ | 0.50 |
| Example 4 | A3000 | 60 | N6 | 15 | NC10 | 25 | E-2[*6] | 3 | 80 | 132 | $5.2x10^{-2}$ | 0.44 |
| Example 5 | A3000 | 30 | N6 | 17 | NC10 | 53 | E-2 | 5 | 70 | 136 | $6.0x10^{-2}$ | 0.47 |
| Example 6 | A3000 | 21 | N66 | 16 | NC10 | 63 | E-3[*7] | 10 | 75 | 135 | $5.5x10^{-2}$ | 0.47 |
| Comparative Example 1 | A3000 | 89 | N6 | 11 | NC10 | 0 | E-1 | 5 | 70 | 125 | $4.2x10^{-2}$ | 0.38 |
| Comparative Example 2 | A3000 | 40 | N66 | 30 | NC10 | 30 | E-1 | 7 | 20 | 125 | $6.5x10^{-2}$ | 0.70 |
| Comparative Example 3 | A3000 | 0 | N6 | 15 | NC10 | 85 | E-2 | 5 | 25 | 140 | $3.0x10^{-2}$ | 0.46 |
| Comparative Example 4 | A3000 | 30 | N6 | 17 | NC10 | 53 | - | 0 | 15 | 138 | $5.5x10^{-2}$ | 0.40 |
| Comparative Example 5 | A3000 | 50 | - | 0 | NC10 | 50 | E-1 | 10 | 80 | 140 | $3.0x10^{-2}$ | 0.25 |
| Comparative Example 6 | A3000 | 63 | N6 | 16 | NC10 | 21 | E-2 | 30 | 70 | 115 | $6.5x10^{-2}$ | 0.50 |

*1 Bisphenol A-based polycarbonate resin, produced by Idemitsu Petrochemical Co., Ltd. (trade name: Toughlon A-3000) (viscosity average molecular weight: 29,300)

*2 Nylon 6, produced by Ube Industries, Ltd. (trade name: Ube Nylon 1013)

*3 Nylon 66, produced by Ube Industries, Ltd. (trade name: Ube Nylon 2020)

*4 Polyarylate, produced by Du-Pont Corp. (trade name: Arylon LX101 NC10)

*5 Acrylate elastomer, manufactured by Nippon Zeon Co., Ltd. (trade name: HI-BLEN B611)

*6 Acrylate elastomer, manufactured by Rohm & Haas Corp. (trade name: Paraloid KM330)

*7 Acrylate elastomer, manufactured by Mitsubishi Rayon Co., Ltd. (trade name: METABLEN W800)

*8 According to ASTM D256 (Thickness: 3.2 mm)

*9 According to ASTM D648 (Thickness: 3.2 mm, Load: 18.6 $kg/cm^2$)

*10 According to JIS K7210 (measurement temperature: 280°C)

*11 Critical strain according to the 1/4 oval method described in Nakatsuji et al "Shikizai" vol.39, page 455 (1966), solvent: mixture of toluene (40% by volume) and isooctane (60% by volume)

*12 Acrylate elastomer containing butadiene, manufactured by KUREHA CHEMICAL INDUSTRIES, CO., LTD. (trade name: HIA 15)

## Claims

**1.** A heat-resistant resin composition comprising
(A) 10 to 80% by weight of aromatic polycarbonate resin,

(B) 10 to 80% by weight of polyarylate,
(C) 10 to 20% by weight of polyamide, and
(D) 1 to 15 parts by weight of rubber-like elastomer to 100 parts by weight of the above (A), (B) and (C) in total.

2. The heat-resistant resin composition as claimed in Claim 1, wherein the aromatic polycarbonate resin is polymer having a repeating unit represented by the general formula:

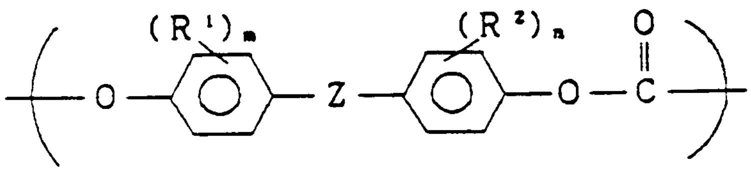

in which Z is a single bond or an alkylene group having 1 to 8 carbon atoms, an alkylidene group having 2 to 8 carbon atoms, a cycloalkylene group having 5 to 15 carbon atoms, a cycloalkylidene group having 5 to 15 carbon atoms, $SO_2$, SO, O, CO or the group represented by:

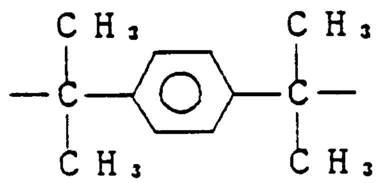

$R^1$ and $R^2$ are each a hydrogen atom, a chlorine atom, a bromine atom or an alkyl group having 1 to 8 carbon atoms, and m and n are each an integer of 0 to 4.

3. The heat-resistant resin composition as claimed in Claim 1, wherein the polyarylate is polymer obtained by reacting a mixture of terephthalic acid and isophthalic acid or the function derivatives thereof, in which molar ratios of the terephthalic acid group and the isophthalic acid group are 1:9 to 9:1, with bisphenols represented by the general formula:

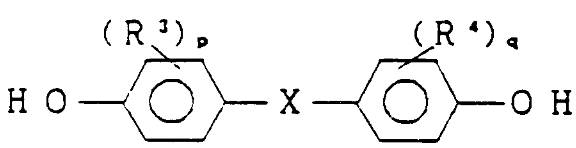

where X is O,S, $SO_2$, an alkylene group or an alkylidene group, $R^3$ and $R^4$ are each a hydrogen atom, a halogen atom or a hydrocarbon group, p and q are each an integer of 1 to 4.

4. The heat-resistant resin composition as claimed in Claim 3, wherein the bisphenols are at least one compound selected from the group consisting of 4,4-dihydroxy-diphenylether, bis(4-hydroxy-2-methylphenyl)ether, bis(4-hydroxy-3-chlorophenyl)ether, bis(4-hydroxyphenyl)sulfide, bis(4-hydroxyphenyl)sulfone, bis(4-hydroxyphenyl)ketone, bis(4-hydroxyphenyl)methane, bis(4-hydroxy-3-methylphenyl)methane, bis(4-hydroxy-3,5-dichlorophenyl)methane, bis(4-hydroxy-3,5-dibromophenyl)methane, bis(4-hydroxy-3,5-difluorophenyl)methane, 1,1-bis(4-hydroxyphenyl)ethane, 2,2-bis(4-hydroxy-3-methylphenyl)propane, 2,2-bis(4-hydroxy-3-chlorophenyl)propane, 2,2-bis(4-hydroxy-3,5-dichlorophenyl)propane, 2,2-bis(4-hydroxy-3,5-dibromophenyl)propane, 1,1-bis(4-hydroxyphenyl)-n-butane, bis(4-hydroxyphenyl)phenylmethane, bis(4-hydroxyphenyl)diphenylmethane, bis(4-hydroxyphenyl)-4-methylphenylmethane, 1,1-bis(4-hydroxyphenyl)-2,2,2-trichloroethane, bis(4-hydroxyphenyl)-(4′-chlorophenyl)methane, 1,1-bis(4-hydroxyphenyl)cyclohexane, bis(4-hydroxyphenyl)cyclohexylmethane, and 2,2-bis(4-hydroxynaphthyl)propane.

**5.** The heat-resistant resin composition as claimed in Claim 1, wherein the polyamide is polymer represented by the general formula:

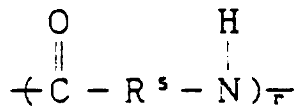

or

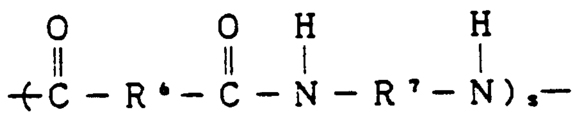

in which $R^5$, $R^6$, and $R^7$ are each an alkylene group, a part of which may be replaced by aromatic groups or aliphatic groups, and r and s show the degree of polymerization.

**6.** The heat-resistant resin composition as claimed in Claim 1, wherein the polyamide is polyhexamethylene adipamide, polycaprolactam, polyhexamethylene sebacamide, polydecamethylene adipamide or copolymers thereof.

**Patentansprüche**

**1.** Wärmebeständige Harzzusammensetzung, umfassend
(A) 10 bis 80 Gewichts-% aromatisches Polycarbonatharz,
(B) 10 bis 80 Gewichts-% Polyarylat,
(C) 10 bis 20 Gewichts-% Polyamid und
(D) 1 bis 15 Gewichtsteile kautschukartiges Elastomeres auf 100 Gewichtsteile der obigen Komponenten (A), (B) und (C) insgesamt.

**2.** Wärmebeständige Harzzusammensetzung nach Anspruch 1, worin das aromatische Polycarbonatharz ein Polymeres ist mit einer Struktureinheit, die durch die allgemeine Formel

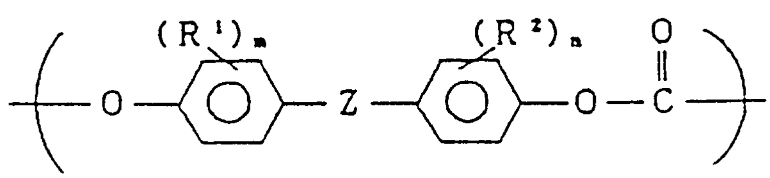

repräsentiert wird, worin Z eine Einfachbindung oder eine Alkylengruppe mit 1 bis 8 Kohlenstoffatomen, eine Alkylidengruppe mit 2 bis 8 Kohlenstoffatomen, eine Cycloalkylengruppe mit 5 bis 15 Kohlenstoffatomen, eine Cycloalkylidengruppe mit 5 bis 15 Kohlenstoffatomen, $SO_2$, SO, O, CO oder die Gruppe ist, die durch die Formel

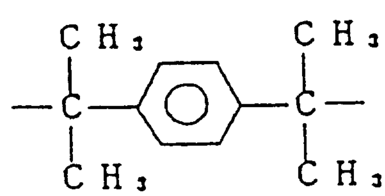

repräsentiert wird, $R^1$ und $R^2$ sind jeweils ein Wasserstoffatom, ein Chloratom, ein Bromatom oder eine

Alkylgruppe mit 1 bis 8 Kohlenstoffatomen, und m und n sind jeweils eine ganze Zahl von 0 bis 4.

3. Wärmebeständige Harzzusammensetzung nach Anspruch 1, worin das Polyarylat ein Polymeres ist, das erhalten wird durch Reaktion eines Gemisches von Terephthalsäure und Isophthalsäure oder deren funktioneller Derivate, wobei die molaren Verhältnisse der Terephthalsäuregruppe und der Isophthalsäuregruppe 1:9 bis 9:1 betragen, mit Bisphenolen, die durch die allgemeine Formel

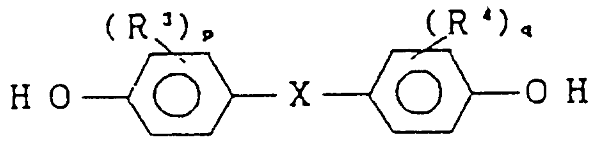

repräsentiert werden worin X die Bedeutung O, S, $SO_2$, eine Alkylengruppe oder eine Alkylidengruppe hat, $R^3$ und $R^4$ sind jeweils ein Wasserstoffatom, ein Halogenatom oder eine Kohlenwasserstoffgruppe, p und q sind jeweils eine ganze Zahl von 1 bis 4.

4. Wärmebeständige Harzzusammensetzung nach Anspruch 3, worin die Bisphenole wenigstens eine Verbindung darstellen, ausgewählt aus der Gruppe, bestehend aus 4,4-Dihydroxyphenylether, Bis(4-hydroxy-2-methylphenyl)ether, Bis(4-hydroxy-3-chlorphenylether, Bis(4-hydroxyphenyl)sulfid, Bis(4-hydroxyphenyl)sulfon, Bis(4-hydroxyphenyl)keton, Bis(4-hydroxyphenyl)methan, Bis(4-hydroxy-3-methylphenyl)methan, Bis(4-hydroxy-3,5-dichlorphenyl)methan, Bis(4-hydroxy-3,5-dibromphenyl)methan, Bis(4-hydroxy-3,5-difluorphenyl)methan, 1,1-Bis(4-hydroxyphenyl)ethan, 2,2-Bis(4-hydroxy-3-methylphenyl)-propan, 2,2-Bis(4-hydroxy-3-chlorphenyl)propan, 2,2-Bis(4-hydroxy-3,5-dichlorphenyl)propan, 2,2-Bis(4-hydroxy-3,5-dibromphenyl)propan, 1,1-Bis(4-hydroxyphenyl)-n-butan, Bis(4-hydroxyphenyl)-phenylmethan, Bis(4-hydroxyphenyl)diphenylmethan, Bis(4-hydroxyphenyl)-4-methylphenylmethan, 1,1-Bis(4-hydroxyphenyl)-2,2,2-trichlorethan, Bis(4-hydroxyphenyl)-(4'-chlorphenyl)methan, 1,1-Bis(4-hydroxyphenyl)cyclohexan, Bis(4-hydroxyphenyl)cyclohexylmethan und 2,2-Bis(4-hydroxynaphthyl)-propan.

5. Wärmebeständige Harzzusammensetzung nach Anspruch 1, worin das Polyamid ein Polymeres ist, repräsentiert durch die allgemeine Formel

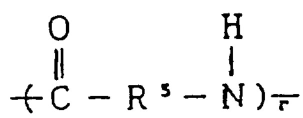

oder

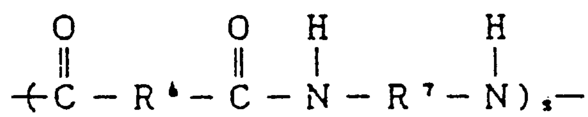

worin jeweils $R^5$, $R^6$ und $R^7$ eine Alkylengruppe darstellen, von denen ein Teil durch aromatische Gruppen oder aliphatische Gruppen ersetzt werden kann, und r und s zeigen den Polymerisationsgrad an.

6. Wärmebeständige Harzzusammensetzung nach Anspruch 1, worin das Polyamid Polyhexamethylenadipamid, Polycaprolactam, Polyhexamethylensebacamid, Polydecamethylenadipamid oder Copolymere davon ist.

## Revendications

1. Composition de résine résistant à la chaleur comprenant
   (A) de 10 à 80% en poids de résine de polycarbonate aromatique;
   (B) de 10 à 80% en poids d'un polyarylate;
   (C) de 10 à 20% en poids d'un polyamide; et

(D) de 1 à 15 parties en poids d'un élastomère caoutchouteux par rapport aux 100 parties en poids du total de (A), (B) et (C) ci-dessus.

**2.** Composition de résine résistant à la chaleur telle que revendiquée dans la revendication 1, dans laquelle la résine de polycarbonate aromatique est un polymère ayant une unité répétitive représentée par la formule générale:

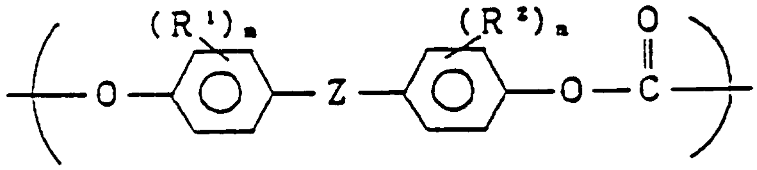

dans laquelle Z est une simple liaison ou un groupe alkylène ayant de 1 à 8 atomes de carbone, un groupe alkylidène ayant de 2 à 8 atomes de carbone, un groupe cycloalkylène ayant de 5 à 15 atomes de carbone, un groupe cycloalkylène ayant de 5 à 15 atomes de carbone, $SO_2$, SO, O, CO ou le groupe représenté par:

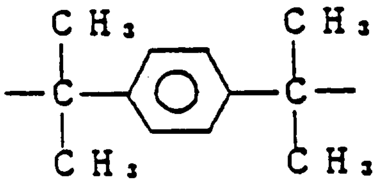

,

$R^1$ et $R^2$ sont chacun un atome d'hydrogène, un atome de chlore, un atome de brome ou un groupe alkyle ayant de 1 à 8 atomes de carbone, et m et n sont chacun un entier de 0 à 4.

**3.** Composition de résine résistant à la chaleur telle que revendiquée dans la revendication 1, dans laquelle le polyarylate est un polymère obtenu en faisant réagir un mélange d'acide téréphthalique et d'acide isophthalique ou des dérivés fonctionnels de ceux-ci, dans lequel les ratios molaires du groupe de l'acide téréphthalique et du groupe de l'acide isophthalique vont de 1:9 à 9:1, avec des bisphénols représentés par la formule générale:

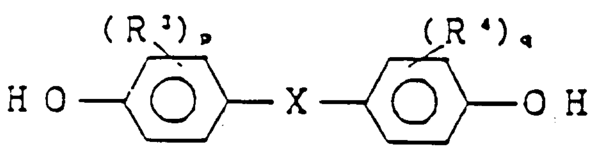

dans laquelle X est O, S, $SO_2$, un groupe alkylène ou un groupe alkylidène, $R^3$ et $R^4$ sont chacun un atome d'hydrogène, un atome d'halogène, ou un groupe hydrocarboné, p et q sont chacun un entier de 1 à 4.

**4.** Composition de résine résistant à la chaleur telle que revendiquée dans la revendication 3, dans laquelle les bisphénols sont au moins un composé sélectionné dans le groupe constitué du 4,4-dihydroxydiphényléther, du bis(4-hydroxy-2-méthylphényl)éther, du bis(4-hydroxy-3-chlorophényl)éther, du bis(4-hydroxyphényl)sulfure, du bis(4-hydroxyphényl)sulfone, de la bis(4-hydroxyphényl)cétone, du bis(4-hydroxyphényl)méthane, du bis(4-hydroxy-3-méthylphényl)méthane, du bis(4-hydroxy-3,5-dichlorophényl)méthane, du bis(4-hydroxy-3,5-dibromophényl)méthane, du bis(4-hydroxy-3,5-difluorophényl)-méthane, du 1,1-bis(4-hydroxyphényl)éthane, du 2,2-bis(4-hydroxy-3-méthylphényl)propane, du 2,2-bis-(4-hydroxy-3-chlorophényl)propane, du 2,2-bis(4-hydroxy-3,5-dichlorophényl)propane, du 2,2-bis(4-hydroxy-3,5-dibromophényl)propane, du 1,1-bis(4-hydroxyphényl)-n-butane, du bis(4-hydroxyphényl)-phénylméthane, du bis(4-hydroxyphényl)diphénylméthane, du bis(4-hydroxyphényl)-4-méthylphénylméthane, du 1,1-bis(4-hydroxyphényl)-2,2,2-trichloroéthane, du bis(4-hydroxyphényl)-(4'-chlorophényl)-méthane, du 1,1-bis(4-hydroxyphényl)cyclohexane, du bis(4-hydroxyphényl)cyclohexylméthane, et du 2,2-bis(4-hydroxynaphthyl)propane.

**5.** Composition de résine résistant à la chaleur telle que revendiquée dans la revendication 1, dans laquelle le polyamide est un polymère représenté par la formule générale:

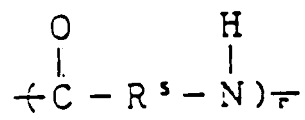

ou la formule générale:

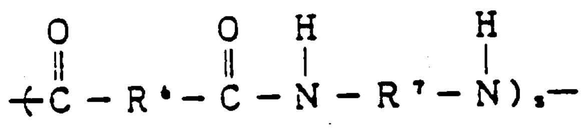

dans lesquelles $R^5$, $R^6$ et $R^7$ sont chacun un groupe alkylène, dont une partie peut être remplacée par des groupes aromatiques ou par des groupes aliphatiques, et r et s indiquent le taux de polymérisation.

**6.** Composition de résine résistant à la chaleur telle que revendiquée dans la revendication 1, dans laquelle le polyamide est le polyhexaméthylène adipamide, le polycaprolactame, le polyhexaméthylène sébacamide, le polydécaméthylène adipamide ou des copolymères de ceux-ci.